# FASCICULE DE BREVET EUROPEEN

(11) **EP 1 714 833 B1**
(45) Date de publication et mention de la délivrance du brevet: **05.12.2007**
(21) Numéro de dépôt: 06300227.3
(22) Date de dépôt: 14.03.2006
(51) Int. Cl.: B60R 13/08, B60R 1/06, B60R 16/02, F16J 15/06, F16J 15/08

(54) **Elément d'étanchéité pour véhicule automobile et utilisation d'un élément de ce type**
Dichtelement für Kraftfahrzeuge und Nutzung eines solchen Dichtelementes
Sealing element for vehicles and use of such an element

(30) Priorité: 19.04.2005 FR 0503881
(43) Date de publication de la demande: 25.10.2006
(73) Titulaire: RENAULT S.A.S., 92100 Boulogne Billancourt (FR)
(72) Inventeur: Thevenin, Laurent, 78280 Guyancourt (FR)

(56) Documents cités:
- US-A- 4 957 803
- US-A1- 2005 046 218
- US-B1- 6 260 977
- PATENT ABSTRACTS OF JAPAN vol. 2003, no. 12, 5 décembre 2003 (2003-12-05) & JP 2004 082952 A (ICHIKOH IND LTD), 18 mars 2004 (2004-03-18)
- PATENT ABSTRACTS OF JAPAN vol. 2002, no. 03, 3 avril 2002 (2002-04-03) & JP 2001 322498 A (ICHIKOH IND LTD), 20 novembre 2001 (2001-11-20)

## Description

L'invention concerne un élément d'étanchéité pour véhicule automobile destiné à assurer l'étanchéité d'une tôle de panneau de porte traversée par une pièce saillante, et l'utilisation de ce type élément. L'invention concerne plus particulièrement l'utilisation d'un tel élément pour assurer l'étanchéité au niveau d'un rétroviseur, la pièce saillante étant destinée à recevoir le doigt de commande de la vitre de rétroviseur.

Afin de réduire le niveau sonore à l'intérieur d'un habitacle de véhicule, les accessoires sont montés sur les parties métalliques en utilisant des éléments permettant d'amortir les vibrations au niveau des liaisons et ainsi d'assurer une étanchéité acoustique.

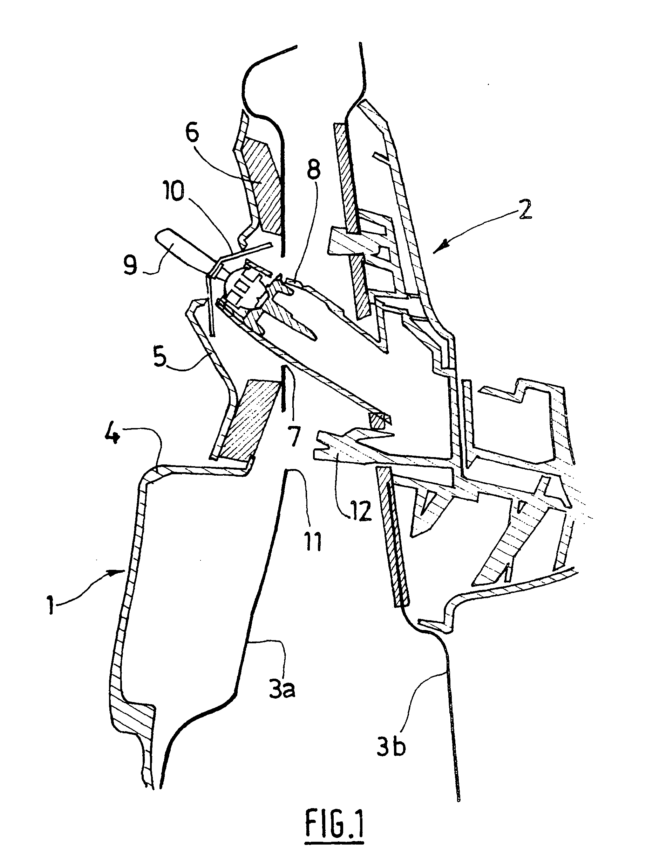

On dispose habituellement un élément d'étanchéité formé d'une plaque de mousse entre la tôle du panneau de porte et l'habillage intérieur du cache rétroviseur afin d'amortir les vibrations et de réduire le bruit produit. La figure 1 représente une section du panneau intérieur de porte 1 et du rétroviseur 2, le panneau intérieur de porte étant formé d'une tôle de panneau de porte interne 3a, d'une tôle de panneau de porte externe 3b et d'un habillage intérieur 4, un cache rétroviseur 5 formant l'habillage intérieur au niveau du rétroviseur. Sur cette figure, une plaque de mousse épaisse 6 est comprimée entre la tôle du panneau de porte interne 3a et le cache rétroviseur 5. La tôle de panneau de porte interne 3a présente un orifice 7 destiné au passage d'une pièce sensiblement cylindrique 8 solidaire du rétroviseur 2 et destinée au réglage de ce dernier. Un doigt de commande 9, destiné au réglage de la position de la vitre du rétroviseur, est également monté sur la pièce cylindrique 8 de manière à saillir à l'intérieur de l'habitacle du véhicule. Une rondelle 10 en matériau souple permet de combler le vide entre le doigt 9 et le cache 5 et d'assurer l'étanchéité. Après montage, la rondelle 10 est repliée vers la pièce saillante 8, son bord étant dirigé vers la tôle interne 3a. Un autre orifice 11 est prévu dans la tôle 2 afin de permettre le vissage d'une vis de fixation 12 du rétroviseur située derrière la tôle 3a lorsque le rétroviseur est monté.

Le montage de la plaque de mousse 6 est réalisé de la manière suivante. Après la mise en place du rétroviseur 2 sur la tôle de panneau de porte externe 3b, et le vissage de ses vis de fixation, le cache rétroviseur 5 est mis en place avec la mousse 6. Celle-ci présente une épaisseur constante relativement importante, supérieure à l'espacement entre la tôle interne 3a et l'habillage 5 de sorte que sa compression permet d'assurer une étanchéité acoustique entre la tôle et l'habillage. Cette plaque de mousse est généralement disposée autour de l'orifice 7 de la tôle, à distance de ce dernier afin d'éviter que la rondelle 10, montée sur le doigt de commande 9, ne comprime et ne déplace la plaque de mousse 6 lors de son montage. Toutefois, la paroi du cache rétroviseur recevant la plaque de mousse présente une forme complexe, de sorte que sa distance à la tôle 3a en regard est variable. La plaque de mousse présentant une épaisseur constante, la compression de la mousse n'est donc pas identique en tout point de sa surface, et notamment, la plaque de mousse ne peut être appliquée sur toute la surface de l'orifice 11. Il en résulte une qualité d'étanchéité acoustique inégale à cet endroit, ainsi qu'au niveau de la pièce cylindrique 8, du fait que la mousse ne peut épouser parfaitement le pourtour de cette pièce.

De plus, il arrive que la plaque de mousse bouge lors de son montage et ne soit pas correctement mise en place, ce qui résulte en des défauts d'étanchéité acoustique encore plus importants. Par ailleurs, l'utilisation d'une plaque de mousse aussi épaisse s'avère onéreuse.

L'invention vise à pallier ces inconvénients en proposant un élément d'étanchéité permettant d'améliorer l'étanchéité acoustique d'une tôle traversée par une pièce saillante. L'élément d'étanchéité selon l'invention présente l'avantage d'être moins encombrant, moins coûteux et de montage facile et rapide.

Une solution alternative pour ces problèmes est indiquée dans le document D1 qui montre toutes les caractéristiques du préambule de la revendication 1.

A cet effet, un premier objet de l'invention concerne un élément d'étanchéité pour véhicule automobile destiné à assurer l'étanchéité d'une tôle de panneau de porte traversée par une pièce saillante, cet élément étant formé d'une plaque de mousse, la plaque de mousse étant pourvue d'un orifice apte à recevoir la pièce saillante et à en épouser le pourtour dans la position d'utilisation de l'élément d'étanchéité, la mousse étant pourvue d'une face adhésive recouverte d'un film de protection amovible, le film de protection présentant une ligne de découpe fermée située autour dudit orifice à une distance prédéterminée du bord de l'orifice.

La surface adhésive permet une meilleure adhérence de la mousse sur la tôle, et donc une meilleure étanchéité acoustique, tandis que la ligne de découpe permet de laisser en place la partie du film située immédiatement au voisinage du bord de l'orifice, de sorte que la pièce saillante peut être introduite à l'intérieur de l'orifice de la plaque de mousse sans que le bord de l'orifice ne colle sur la pièce saillante et ne gêne la mise en place de la mousse. Cet agencement permet de réaliser un orifice dans la plaque de mousse dont le bord peut épouser le pourtour de la pièce saillante, assurant ainsi une bonne étanchéité acoustique à cet endroit.

Avantageusement, l'épaisseur de la plaque de mousse est inférieure à la distance entre la tôle de panneau de porte et un cache disposé en regard du côté de la tôle où saille la pièce saillante. Le coût de l'élément d'étanchéité selon l'invention est ainsi réduit, sans pour autant nuire à son efficacité.

Avantageusement, un doigt de commande étant monté sur la pièce saillante et sur le cache, une rondelle montée sur le doigt étant repliée vers la pièce saillante, l'épaisseur de la plaque de mousse est inférieure à la distance entre la tôle de panneau de porte et le bord de la rondelle. Il n'y a ainsi plus aucun risque d'interférence avec une telle rondelle qui dégraderait la mousse.

Avantageusement, la surface et la forme de la plaque de mousse sont choisies de manière à recouvrir un (des) orifice(s) de la tôle de panneau de porte situé(s) à proximité de la pièce saillante. L'étanchéité acoustique est ainsi améliorée, l'adhérence de la mousse étant assurée par sa face adhésive.

Un deuxième objet de l'invention concerne une utilisation d'un élément d'étanchéité selon l'invention pour réaliser l'étanchéité d'une tôle de panneau de porte de véhicule traversée par une pièce saillante, dans laquelle on retire la majeure partie du film de protection, une portion de film restant sur le pourtour de l'orifice de la plaque de mousse, puis on fait glisser le bord de l'orifice de la plaque de mousse sur la pièce saillante, la face adhésive de la plaque de mousse étant dirigée vers la tôle, jusqu'à ce que la plaque de mousse adhère à la tôle.

Avantageusement, l'élément d'étanchéité est utilisé pour réaliser l'étanchéité d'une tôle de panneau de porte de véhicule traversée par une pièce saillante destinée à recevoir le doigt de commande de réglage d'un rétroviseur.

Un troisième objet de l'invention concerne une utilisation d'un élément d'étanchéité pour réaliser l'étanchéité d'une tôle de panneau de porte de véhicule traversée par une pièce saillante destinée à recevoir le doigt de commande de réglage d'un rétroviseur, dans laquelle l'élément d'étanchéité est formé d'une plaque de mousse pourvue d'une face adhésive destinée à être plaquée contre la tôle et pourvue d'un orifice pour le passage de la pièce saillante. La face adhésive permet d'améliorer l'adhérence de la plaque de mousse en tout point de sa surface, et d'améliorer ainsi l'étanchéité acoustique réalisée. Par ailleurs, l'épaisseur de la plaque de mousse peut être réduite de manière notable, la mousse étant maintenue en place par sa face adhésive et non plus par compression.

L'élément d'étanchéité étant ajusté serré contre la pièce saillante, et un film de protection est situé autour de l'orifice sur une distance prédéterminée du bord de l'orifice.

L'invention est maintenant décrite en référence aux dessins annexés, non limitatifs, dans lesquels :
- la figure 1 est une section d'un panneau de porte pourvu d'un élément d'étanchéité selon l'art antérieur ;
- la figure 2 est une section d'un panneau de porte identique à celui de la figure 1, pourvu d'un élément d'étanchéité selon l'invention ;
- la figure 3 est une vue de face d'un élément d'étanchéité selon l'invention.

La figure 1 a déjà été décrite ci-dessus.

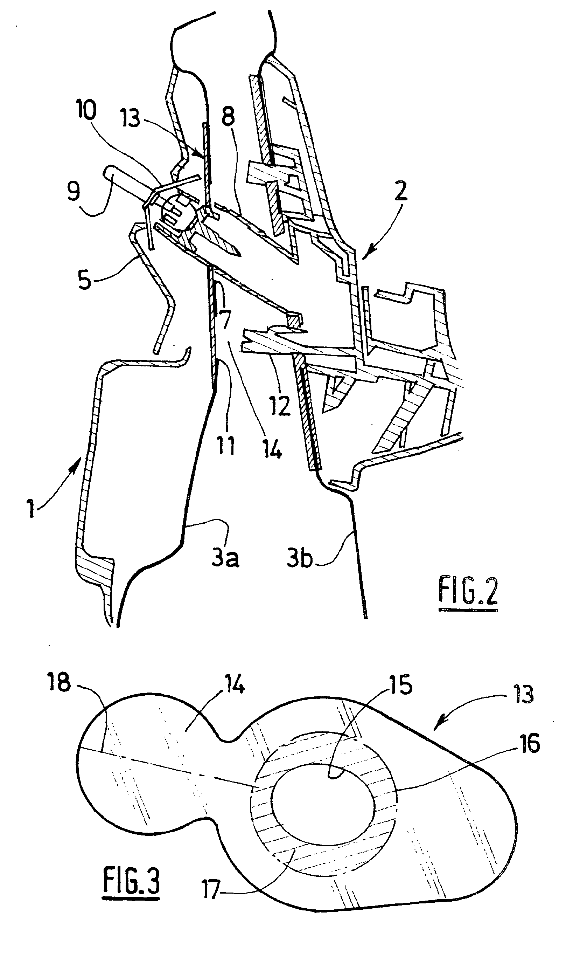

Sur la figure 2, les éléments communs avec ceux de la figure 1 portent le même numéro de référence, et ne seront donc pas décrits à nouveau.

Sur la figure 2, est représenté un élément d'étanchéité 13 selon l'invention destiné à assurer l'étanchéité d'une tôle de panneau de porte 3a traversée par une pièce saillante 8. Dans l'exemple représenté, l'élément d'étanchéité est utilisé au niveau d'un cache rétroviseur 5 d'une tôle de panneau de porte interne 3a, et la pièce saillante est formée par la pièce cylindrique 8 destinée à recevoir le doigt de commande 9 de la vitre d'un rétroviseur 2. L'invention ne se limite toutefois pas à cet exemple, et peut être utilisée pour des panneaux traversés par des pièces saillantes de forme et fonction différentes.

Selon l'invention, la plaque de mousse épaisse de la figure 1 a été remplacée par l'élément d'étanchéité 13 selon l'invention représenté figure 2. Cet élément d'étanchéité est formé d'une plaque de mousse 13 de faible épaisseur pourvue d'une face adhésive 14 recouverte d'un film protecteur amovible. Cette face adhésive 14 est destinée à être collée contre la tôle de panneau de porte interne 3a.

Il n'est donc plus nécessaire que la plaque de mousse présente une épaisseur importante pour être maintenue en position. Une épaisseur de quelques millimètres, par exemple de l'ordre de 1 à 5 mm, et de préférence de l'ordre de 2 à 3 mm environ suffit. De préférence, cette épaisseur est inférieure à la distance entre la tôle de panneau de porte 3a et le cache 5 disposé en regard du côté de la tôle 3a où saille la pièce saillante 8. De préférence encore, l'épaisseur de la plaque de mousse 13 est inférieure à la distance entre la tôle de panneau de porte 3a et le bord de la rondelle 10. Ainsi, du fait de sa faible épaisseur, la rondelle 10 du doigt de commande 9 peut être mise en place sans risquer de toucher la plaque de mousse 13, de la déplacer ou de la détériorer comme c'était le cas auparavant.

L'élément d'étanchéité 13 est représenté sur la figure 3, du côté de sa face adhésive 14 recouverte d'un film protecteur. Cet élément présente un orifice 15 destiné au passage de la pièce saillante 8. Cet orifice 15 est conçu de manière à épouser le pourtour de la pièce 8 lorsque la plaque de mousse 13 est mise en place, tel que visible sur la figure 2. De préférence, les dimensions de l'orifice 15 sont choisies légèrement inférieures aux dimensions externes de la pièce 8. Le bord de l'orifice 15 épouse ainsi parfaitement la pièce 8, sans que la mise en place de la plaque de mousse 13 ne soit gênée, l'élasticité de celle-ci permettant une mise en place aisée malgré les faibles dimensions de l'orifice 15. Les dimensions de l'orifice 15 sont telles que ce dernier est un peu plus petit que la section de la pièce 8 au droit de l'orifice 7, de telle manière que la mousse 13 soit ajustée serrée contre la pièce 8.

Afin de faciliter la mise en place de la plaque de mousse 13, une ligne de découpe fermée 16 est prévue sur le film protecteur de la face adhésive 14. Cette ligne de découpe 16 fermée est prévue autour de l'orifice 15, à une distance prédéterminée du bord de ce dernier. Elle est par exemple circulaire. Une zone 17 est ainsi définie entre la ligne de découpe 16 et le bord de l'orifice 15. Cette zone 17, représentée en hachuré sur la figure 2, correspond à une zone dans laquelle le film protecteur de la face adhésive ne sera pas enlevé lors du montage de l'élément d'étanchéité.

De préférence, une autre ligne de découpe 18 est également prévue sur le film protecteur afin de faciliter l'enlèvement du film. Il s'agit par exemple d'une ligne rectiligne sensiblement médiane s'étendant au moins sur une partie de la longueur de l'élément d'étanchéité, qui rejoint la ligne de découpe 16. Les lignes de découpe 16 et 18 permettent ainsi un enlèvement aisé du film protecteur à l'exclusion du film protecteur de la zone 17.

La surface et la forme de l'élément d'étanchéité 13 sont de préférence choisies de sorte qu'une fois monté, l'élément d'étanchéité recouvre d'autres orifices éventuels de la tôle 3a, tel que par exemple l'orifice 11. Bien entendu, cette forme dépend de la place disponible, de la position et de la taille des orifices que l'on souhaite recouvrir.

L'élément d'étanchéité selon l'invention est mis en place de la manière suivante.

Après montage du rétroviseur 2 sur la tôle externe 3b, le film protecteur de l'élément d'étanchéité 13 est enlevé à l'aide des lignes de découpe 16 et 18 sur toute la surface de l'élément 13, à l'exception de la zone 17 située autour de l'orifice 15. Puis, on fait glisser le bord de l'orifice 7 de la plaque de mousse sur la pièce 8, la face adhésive 14 de la plaque de mousse étant dirigée vers la tôle 3a, jusqu'à ce que la plaque de mousse adhère à la tôle. La présence de film protecteur sur le bord de l'orifice 15 permet de faciliter le glissement de l'élément d'étanchéité le long de la pièce saillante 8. Le cache rétroviseur 5, ainsi que le doigt de commande 9 et sa rondelle 10 peuvent ensuite être mis en place.

## Revendications

1. Elément d'étanchéité (13) pour véhicule automobile destiné à assurer l'étanchéité d'une tôle de panneau de porte (3a) traversée par une pièce saillante (8), cet élément (13) étant formé d'une plaque de mousse, la plaque de mousse étant pourvue d'un orifice (15) apte à recevoir la pièce saillante (8) et à en épouser le pourtour dans la position d'utilisation de l'élément d'étanchéité, et la mousse étant pourvue d'une face adhésive (14) recouverte d'un film de protection amovible, **caractérisé en ce que** le film de protection présente une ligne de découpe (16) fermée située autour dudit orifice (15) à une distance prédéterminée du bord de l'orifice.

2. Elément d'étanchéité selon la revendication 1, **caractérisé en ce que** l'épaisseur de la plaque de mousse est inférieure à la distance entre la tôle de panneau de porte (3a) et un cache (5) disposé en regard du côté de la tôle (3a) où saille la pièce saillante (8).

3. Elément d'étanchéité selon la revendication 1 ou 2, dans lequel un doigt de commande (9) est monté sur la pièce saillante et sur le cache (5), une rondelle (10) montée sur le doigt (9) étant repliée vers la pièce saillante, **caractérisé en ce que** l'épaisseur de la plaque de mousse est inférieure à la distance entre la tôle de panneau de porte (3a) et le bord de la rondelle (10).

4. Elément d'étanchéité selon l'une des revendications 1 à 3, **caractérisé en ce que** la surface et la forme de la plaque de mousse (13) sont choisies de manière à recouvrir un (des) orifice(s) (11) de la tôle de panneau de porte situé(s) à proximité de la pièce saillante (8).

5. Utilisation d'un élément d'étanchéité (13) selon l'une des revendications 1 à 4 pour réaliser l'étanchéité d'une tôle de panneau de porte (3a) de véhicule traversée par une pièce saillante (8), **caractérisée en ce que** l'on retire la majeure partie du film de protection, une portion (17) de film restant sur le pourtour de l'orifice (15) de la plaque de mousse, puis on fait glisser le bord de l'orifice (15) de la plaque de mousse sur la pièce saillante (8), la face adhésive (14) de la plaque de mousse étant dirigée vers la tôle (3a), jusqu'à ce que la plaque de mousse adhère à la tôle (3a).

6. Utilisation d'un élément d'étanchéité (13) selon la revendication 5 pour réaliser l'étanchéité d'une tôle de panneau de porte (3a) de véhicule traversée par une pièce saillante (8) destinée à recevoir le doigt de commande (9) de réglage d'un rétroviseur.

7. Utilisation d'un élément d'étanchéité (13) pour réaliser l'étanchéité d'une tôle de panneau de porte (3a) de véhicule traversée par une pièce saillante (8) destinée à recevoir le doigt de commande (9) de réglage d'un rétroviseur, dans laquelle l'élément d'étanchéité est formé d'une plaque de mousse pourvue d'une face adhésive (14) destinée à être plaquée contre la tôle (3a) et Pourvue d'un orifice (15) pour le passage de la pièce saillante (8), **caractérisée en ce que** l'élément (13) est ajusté serré contre la pièce (8), un film de protection étant situé autour de l'orifice (15) sur une distance prédéterminée du bord de l'orifice (15).

## Claims

1. Sealing element (13) for a motor vehicle designed to seal a door panel metal sheet (3a) traversed by a protruding part (8), this element (13) being formed of a foam plate, the foam plate being provided with an orifice (15) capable of receiving the protruding part (8) and of closely following its periphery in the position of use of the sealing element, and the foam being provided with an adhesive face (14) covered with a removable protective film, **characterized in that** the protective film has a closed cutting line (16) situated around the said orifice (15) at a predetermined distance from the edge of the orifice.

2. Sealing element according to Claim 1, **characterized in that** the thickness of the foam plate is less than the distance between the door panel metal sheet (3a) and a cover (5) placed opposite on the side of the metal sheet (3a) where the protruding part (8) protrudes.

3. Sealing element according to Claim 1 or 2 in which a control finger (9) is mounted on the protruding part and on the cover (5), a shim (10) mounted on the finger (9) being folded towards the protruding part, **characterized in that** the thickness of the foam plate is less than the distance between the door panel metal sheet (3a) and the edge of the shim (10).

4. Sealing element according to one of Claims 1 to 3, **characterized in that** the surface area and the shape of the foam plate (13) are chosen so as to cover one or more orifices (11) of the door panel metal sheet situated close to the protruding part (8).

5. Use of a sealing element (13) according to one of Claims 1 to 4 to seal a vehicle door panel metal sheet (3a) traversed by a protruding part (8), **characterized in that** the majority of the protective film is removed, a portion (17) of film remaining on the periphery of the orifice (15) of the foam plate, then the edge of the orifice (15) of the foam plate is made to slide over the protruding part (8), the adhesive face (14) of the foam plate being directed towards the metal sheet (3a), until the foam plate adheres to the metal sheet (3a).

6. Use of a sealing element (13) according to Claim 5 to seal a vehicle door panel metal sheet (3a) traversed by a protruding part (8) designed to receive the control finger (9) for adjusting a rear-view mirror.

7. Use of a sealing element (13) to seal a vehicle door panel metal sheet (3a) traversed by a protruding part (8) designed to receive the control finger (9) for adjusting a rear-view mirror, in which the sealing element is formed of a foam plate provided with an adhesive face (14) designed to be flattened against the metal sheet (3a) and provided with an orifice (15) for the protruding part (8) to pass through, **characterized in that** the element (13) is adjusted tight against the part (8), a protective film being situated around the orifice (15) at a predetermined distance from the edge of the orifice (15).

## Patentansprüche

1. Dichtelement (13) für ein Kraftfahrzeug, das dazu bestimmt ist, die Dichtheit eines Türverkleidungsblechs (3a) zu gewährleisten, das von einem vorstehenden Bauteil (8) durchquert wird, wobei dieses Element (13) von einer Schaumstoffplatte gebildet wird, wobei die Schaumstoffplatte mit einer Öffnung (15) versehen ist, die das vorstehende Bauteil (8) aufnehmen und sich in der Nutzungsstellung des Dichtelements an seinen Umfang anpassen kann, und der Schaumstoff mit einer Haftseite (14) versehen ist, die von einer lösbaren Schutzfolie bedeckt ist, **dadurch gekennzeichnet, dass** die Schutzfolie eine geschlossene Schnittlinie (16) hat, die sich um die Öffnung (15) herum in einem vorbestimmten Abstand vom Rand der Öffnung befindet.

2. Dichtelement nach Anspruch 1, **dadurch gekennzeichnet, dass** die Dicke der Schaumstoffplatte geringer ist als der Abstand zwischen dem Türverkleidungsblech (3a) und einer Abdeckung (5), die gegenüber der Seite des Blechs (3a) angeordnet ist, auf der das vorstehende Bauteil (8) vorsteht.

3. Dichtelement nach Anspruch 1 oder 2, bei dem ein Steuerstift (9) auf das vorstehende Bauteil und auf die Abdeckung (5) montiert ist, wobei eine auf den Stift (9) montierte Unterlegscheibe (10) zum vorstehenden Bauteil hin umgebogen ist, **dadurch gekennzeichnet, dass** die Dicke der Schaumstoffplatte geringer ist als der Abstand zwischen dem Türverkleidungsblech (3a) und dem Rand der Unterlegscheibe (10).

4. Dichtelement nach einem der Ansprüche 1 bis 3, **dadurch gekennzeichnet, dass** die Oberfläche und die Form der Schaumstoffplatte (13) so gewählt werden, dass sie eine (mehrere) Öffnung (en) (11) des Türverkleidungsblechs bedeckt, die sich in der Nähe des vorstehenden Bauteils (8) befindet (befinden).

5. verwendung eines Dichtelements (13) nach einem der Ansprüche 1 bis 4 zur Herstellung der Dichtheit eines Fahrzeug-Türverkleidungsblechs (3a), das von einem vorstehenden Bauteil (8) durchquert wird, **dadurch gekennzeichnet, dass** der größte Teil der Schutzfolie abgezogen wird, wobei ein Folienabschnitt (17) auf dem Umfang der Öffnung (15) der Schaumstoffplatte bleibt, und dann der Rand der Öffnung (15) der Schaumstoffplatte auf das vorstehende Bauteil (8) geschoben wird, wobei die Haftseite (14) der Schaumstoffplatte zum Blech (3a) gerichtet ist, bis die Schaumstoffplatte am Blech (3a) haftet.

6. Verwendung eines Dichtelements (13) nach Anspruch 5 zur Herstellung der Dichtheit eines Fahrzeug-Türverkleidungsblechs (3a), das von einem vorstehenden Bauteil (8) durchquert wird, das dazu bestimmt ist, den Einstellsteuerstift (9) eines Rückspiegels aufzunehmen.

7. Verwendung eines Dichtelements (13) zur Herstellung der Dichtheit eines Fahrzeug-Türverkleidungsblechs (3a), das von einem vorstehenden Bauteil (8) durchquert wird, das dazu bestimmt ist, den Einstellsteuerstift (9) eines Rückspiegels aufzunehmen, bei der das Dichtelement von einer Schaumstoffplatte gebildet wird, die mit einer Haftseite (14) versehen ist, die dazu bestimmt ist, gegen das Blech (3a) gedrückt zu werden, und mit einer Öffnung (15) für den Durchgang des vorstehenden Bauteils (8) versehen ist, **dadurch gekennzeichnet, dass** das Element (13) gegen das Bauteil (8) gepresst angepasst wird, wobei eine Schutzfolie sich um die Öffnung (15) herum in einem vorbestimmten Abstand zum Rand der Öffnung (15) befindet.
